# EUROPÄISCHE PATENTANMELDUNG

(11) **EP 1 764 517 A2**
(43) Veröffentlichungstag der Anmeldung: **21.03.2007**
(21) Anmeldenummer: 06018811.7
(22) Anmeldetag: 08.09.2006
(51) Int. Cl.: F16B 12/42

(54) **Raumteiler**

(30) Priorität: 19.09.2005 DE 202005014778 U
(71) Anmelder: Wanzl Metallwarenfabrik GmbH, 89336 Leipheim (DE)
(72) Erfinder: Wanzl, Rudolf, 89340 Leipheim (DE)

(57) **Zusammenfassung**

Die Erfindung betrifft einen Raumteiler (1) mit Ständern (2) und flächigen Teilen (3), wobei jedes flächige Teil (3) mittels wenigstens eines Verbindungselementes (4) lösbaren an einem der Ständer (2) angeordnet ist und wobei das Verbindungselement (4) am Randbereich (5) des flächigen Teiles (3) vorgesehen ist, wobei jeder Ständer (2) mit einer Anzahl von Aufnahmen (6) ausgestattet ist, die übereinander an verschiedenen Höhen H angeordnet sind und zur Aufnahme jeweils eines Verbindungselementes (4) dienen, und dass jedes Verbindungselement (4) ein Befestigungselement (7) aufweist, das in der Aufnahme (6) des Ständers (2) lösbar angeordnet ist.

Die Erfindung zeichnet sich dadurch aus, dass das Verbindungselement (4) vorzugsweise zweiteilig aus einem Halter (4.1) und einem Klemmstück (4.2) gebildet ist, wobei jeder Halter (4.1) und jedes Klemmstück (4.2) jeweils eine komplementär zueinander gebildete Passform (4.12) bzw. (4.22) aufweisen und lösbar miteinander verbunden sind.

## Beschreibung

Die Erfindung betrifft einen Raumteiler wie er zum Abgrenzen von Flächen vorzugsweise in SB-Läden vorgesehen ist, mit den Merkmalen im Oberbegriff des Hauptanspruchs.

Ein solcher Raumteiler ist beispielsweise aus der deutschen Gebrauchsmusterschrift DE 298 24 877 U1 bekannt. Der Raumteiler weist Ständer auf, wobei an jedem Ständer üblicherweise zwei Querträger ortsfest angeordnet sind. Der Raumteiler weist weiterhin flächige Teile auf. Die flächigen Teile werden in Längsnuten, die auf der Unterseite der Querträger verlaufen, eingehängt. Eine Fixierung der flächigen Teile an den Ständern ist mittels Schellen vorgesehen, die um den Ständer herumgelegt werden und gegen diesen verspannt werden.

Eine andere Art von Raumteiler beschreibt die europäische Patentschrift EP 0 496 025 B1. Bei dieser Art von Raumteilern werden flächige Teile in einen Ständer eingehängt. Eine Vorrichtung zum lösbaren Verbinden ist an den Randbereichen der Wände vorgesehen. Hierfür verlaufen Verbindungselemente entlang des gesamten Randbereichs, wobei die Verbindungselemente aus Formteilen gebildet sind, die passgenau in die Ausnehmungen am Ständer eingesetzt werden.

Ein weiterer Raumteiler ist in dem deutschen Patent DE 41 04 823 C2 beschrieben. Bei diesem Raumteiler werden die flächigen Teile durch Befestigungselemente lösbar miteinander verbunden, wobei jedes Befestigungsmittel mit Schrauben jeweils am Randbereich des Raumteilers angeordnet ist.

Die bekannten Arten von Raumteilern erweisen sich als nicht vorteilhaft, da entweder eine große Teilevielfalt gegeben ist und somit das Produkt in seinen Herstellkosten zu teuer ist, oder aber es ist umständlich, den Raumteiler aufzubauen, da die beschriebenen Befestigungselemente zum Zusammenfügen der Ständer und flächigen Teile in nicht vorteilhafterweise anzubringen sind.

Es ist Aufgabe der Erfindung, einen besseren Raumteiler aufzuzeigen.

Die Erfindung löst die Aufgabe mit den Merkmalen im Hauptanspruch.

Durch den Einsatz des im Hauptanspruch beschriebenen Raumteilers ist eine einfache Montage des Verbindungselementes am Ständer gegeben. Das Verbindungselement besteht aus den beiden Bauteilen Halter und Klemmstück. Beide sind lösbar miteinander verbunden und als ein Teil am Ständer des Raumteilers anzubringen. Danach sind die flächigen Teile einzusetzen und mittels des Klemmstücks zu fixieren. Ein Herunterfallen des Verbindungselementes während der Montage der flächigen Teile kann somit ausgeschlossen werden.

Der Abstand zwischen einem Ständer und einem flächigen Teil des Raumteilers kann durch das Anbringen des Verbindungselementes gering gehalten werden. Somit können Inventurdifferenzen im Bereich der Raumteiler unterbunden werden.

Die Menge an Verbindungselementen kann variieren. Je nach Höhe der Ständer ist die Anzahl der notwendigen Verbindungselemente zu bestimmen.

Durch die Lösbarkeit jedes Verbindungselementes ist der Umbau jedes Raumteiles sehr einfach durchzuführen.

Der Abstand zwischen Halter und Klemmstück jedes Verbindungselementes kann verschieden groß gewählt werden. Dadurch ist ein Wechsel der flächigen Teile und der Einsatz von flächigen Teilen mit verschiedenen Stärken möglich.

Weiterhin integriert sich das Verbindungselement in der Gesamteinheit des Raumteilers durch seine schlichte und einfache Bauweise.

Die Erfindung wird anhand von Ausführungsbeispielen näher erläutert. Es zeigt
- Fig. 1: ein Verbindungselement in 3-D-Ansicht mit Halter und Klemmstück;
- Fig. 2, 3: einen Halter in 3-D-Ansicht sowie
- Fig. 4, 5: ein Klemmstück in 3-D-Ansicht.

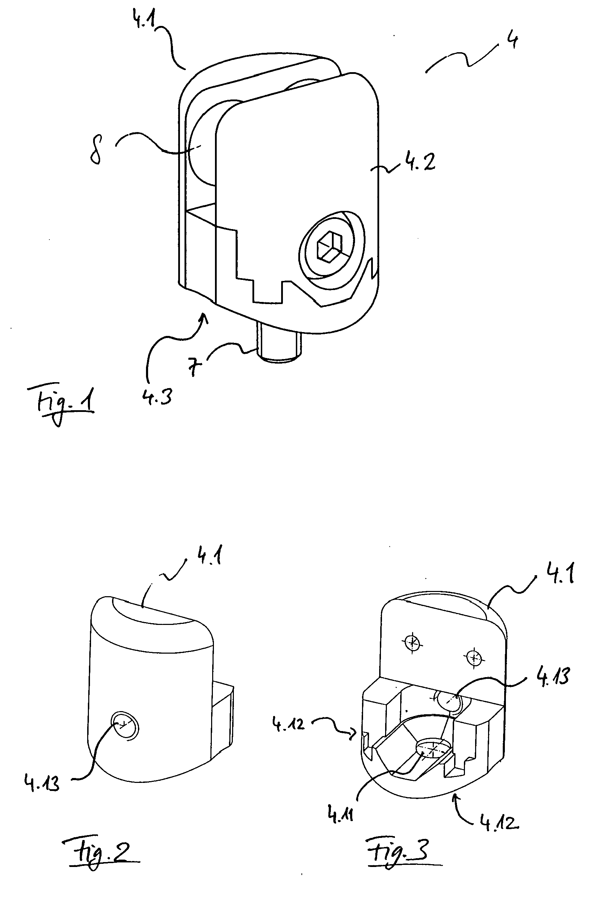

Fig. 1 zeigt ein Verbindungselement 4 in 3-D-Ansicht mit einem Halter 4.1 und einem Klemmstück 4.2. Dieses ist zum Verbinden von nicht näher dargestellten Ständern 2 mit flächigen Teilen 3 vorgesehen, wie sie beispielsweise bei Raumteilern 1 Verwendung finden. Neben dem Einbau in einem Raumteiler 1 kann auch ein Einsatz für die Verbindung anderer flächiger Teile 3 durchaus möglich sein.

Jeder Ständer 2 weist zur Aufnahme des Verbindungselementes 4, insbesondere des Halters 4.1., Aufnahmen 6 auf. Diese sind sinnvollerweise auf verschiedenen Höhen H in einer Linie entlang des Ständers 2 vorgesehen. Je nach Höhe des Ständers 2 ist die Anzahl der Aufnahmen 6 zu bestimmen. Die Höhe der flächigen Teile 3 entspricht üblicherweise der Höhe des Ständers 2. Daher sind an den nicht näher dargestellten Randbereichen 5 jedes flächigen Teiles 3, die jeweils zu einem Ständer 2 gerichtet sind, die Verbindungselemente 4 anzubringen.

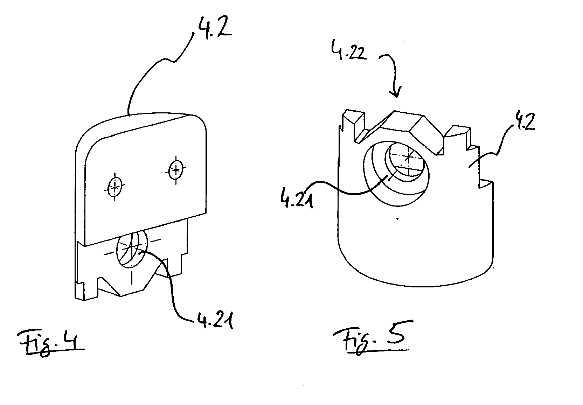

Zum lösbaren Anbringen eines jeden Verbindungselementes 4 an einen Ständer 2 ist ein Befestigungselement 7 vorgesehen. Hierfür weist jeder Halter 4.1, wie er exemplarisch in den Figuren 1 und 2 dargestellt ist, eine senkrechte Bohrung 4.11 auf. Diese dient zum Aufnehmen des Befestigungselementes 7. Für die Wahl des Befestigungselementes 7 bietet sich beispielsweise eine Schraubverbindung an. Diese Schraubverbindung stellt eine erste Schraubverbindung dar. Hierfür ist die Aufnahme 6 des Ständers 2 aus einer Bohrung gebildet. Diese Bohrung weist zur Aufnahme der verwendeten Schraube ein entsprechendes Innengewinde auf. In einer vorteilhaften Ausführung ist das Befestigungselement 7 eine Senkkopfschraube. Andere Arten von Befestigungselementen 7 bleiben dem Fachmann überlassen.

Zunächst wird jeder Halter 4.1 mit einem Befestigungselement 7 in einer Aufnahme 6 eines Ständers 2 angeordnet und fixiert. Daraufhin wird das Klemmstück 4.2, wie es in den Figuren 4 und 5 beispielhaft dargestellt ist, eingesetzt und mit dem Halter 4.1 verbunden.

Halter 4.1 und Klemmstück 4.2 weisen jeweils eine zueinander komplementäre Passform 4.12 auf.

Für das lösbare Verbinden beider Bauteile 4.1 und 4.2 bietet sich eine zweite, horizontal angeordnete Schraubverbindung an. Insbesondere ist der Einsatz einer Linsenschraube zweckmäßig. Zur Sicherung eines jeden flächigen Teiles 3 stellt diese Schraubverbindung eine lösbare Verbindung von Halter 4.1 und Klemmteil 4.2 dar. Jedes Klemmteil 4.2 weist eine horizontale Bohrung 4.21 auf und jeder Halter 4.1 weist ebenfalls eine auf gleicher Höhe horizontal angeordnete Bohrung 4.13 auf, wobei beide Bohrungen 4.13, 4.21, sofern eine Schraubverbindung vorgesehen ist, mit einem entsprechenden Innengewinde versehen sind.

Je nach Stärke eines flächigen Teiles 3 ist die Schraubverbindung mehr oder weniger stark zu spannen. Je nach Größe jedes flächigen Teiles 3 ist die Anzahl der Verbindungselemente 4 zu bestimmen.

Die zweite horizontal angeordnete Schraubverbindung ist derart anzuordnen und zu dimensionieren, dass sie im Inneren des Verbindungselementes 4 integriert ist und nicht nach außen herausragt.

Zweckmäßigerweise ist die zweite Schraubverbindung oberhalb der ersten und orthogonal zur ersten Schraubverbindung angeordnet.

Andere Verbindungsarten der beiden Bauteile 4.1 und 4.2 sind auch vorstellbar und bleiben dem Fachmann überlassen.

Jeder Halter 4.1 weist eine Passform 4.12 auf. Diese dient zum Einsetzen des Klemmstücks 4.2 in den Halter 4.1. In den Figuren 1 bis 3 ist beispielhaft eine Passform 4.12 dargestellt. Ein Wackeln oder Verrutschen des Klemmstückes 4.2 in dem Halter 4.1 ist dadurch ausgeschlossen. Es sind auch andere Anordnungen und Gestalten von Passformen 4.12 möglich.

In den Figuren 4 und 5 ist ein Klemmstück 4.2 in 3-D-Darstellung aufgezeigt. Das Klemmstück 4.2 weist eine horizontale Bohrung 4.21 auf, die zur Aufnahme einer Schraube, zweckmäßigerweise einer Linsenschraube dient. Weiterhin ist eine Passform 4.22 herausgefräst, die zum passgenauen Einsetzten in einen Halter 4.1 vorgesehen ist. Der Halter 4.1 weist jeweils eine komplementäre Passform 4.12 auf. Diese ist in den Figuren 2 und 3 beispielhaft dargestellt.

Die Unterseite 4.3 des Verbindungselementes 4 ist entsprechend des Querschnittes des Ständers 2 zu wählen, so dass eine formschlüssige Verbindung gegeben ist. Im vorliegenden Beispiel ist das Verbindungselement 4 für einen runden Querschnitt eines Ständers 2 bestimmt und weist eine vom Mittelpunkt zum Außenrand hin radial ausgebildete Form auf, die eine formschlüssige Verbindung an einen Ständer 2 ermöglicht. Weiterhin sind Verbindungselemente 4 zum Anbringen an Ständer 2 mit rechteckigen Querschnitten oder andere Querschnitte auch denkbar. Die Unterseite 4.3 ist dann entsprechend abzuändern.

Halter 4.1 und Klemmstück 4.2 weisen in einer vorteilhaften Anordnung Zierkappen 8 auf. Diese sind jeweils an der Innenfläche von Halter 4.1 bzw. Klemmstück 4.2 anzuordnen. Hierdurch kann ein Schaden jedes zu klemmenden flächigen Teiles 3 unterbunden werden. Die Zierkappen 8 können mittels einer Schraub- oder Klebverbindung lösbar oder ortsfest angeordnet werden. Die Anzahl der Zierkappen 8 ist je nach Bedarf zu bestimmen, es erweist sich als vorteilhaft zwei Zierkappen 8 an jedem Halter 4.1 und zwei an jedem Klemmstück 4.2 vorzusehen.

Als Werkstoff empfiehlt sich Aluminium oder ein Druckguss. Andere Werkstoffe sind dem Fachmann überlassen.

Neben der Verwendung des Raumteiles im SB-Bereich ist auch der Einsatz in anderen Bereichen denkbar.

### Bezugszeichenliste

- 1: Raumteiler
- 2: Ständer
- 3: Flächige Teile
- 4: Verbindungselement
- 4.1: Halter
- 4.11: Senkrechte Bohrung
- 4.12: Passform
- 4.13: Horizontale Bohrung
- 4.2: Klemmstück
- 4.21: horizontale Bohrung
- 4.22: Passform
- 4.3: Unterseite (Verbindungselement)
- 5: Randbereich
- 6: Aufnahmen (Ständer)
- 7: Befestigungselement
- 8: Zierkappen

## Patentansprüche

1. Raumteiler (1) mit Ständern (2) und flächigen Teilen (3), wobei jedes flächige Teil (3) mittels wenigstens eines Verbindungselementes (4) lösbar an einem der Ständer (2) angeordnet ist und wobei das Verbindungselement (4) am Randbereich (5) des flächigen Teiles (3) vorgesehen ist, wobei jeder Ständer (2) mit einer Anzahl von Aufnahmen (6) ausgestattet ist, die übereinander an verschiedenen Höhen H angeordnet sind und zur Aufnahme jeweils eines Verbindungselementes (4) dienen, und dass jedes Verbindungselement (4) wenigstens ein Befestigungselement (7) aufweist, das in der Aufnahme (6) des Ständers (2) lösbar angeordnet ist, **dadurch gekennzeichnet, dass** das Verbindungselement (4) vorzugsweise zweiteilig aus einem Halter (4.1) und einem Klemmstück (4.2) gebildet ist, wobei jeder Halter (4.1) und jedes Klemmstück (4.2) jeweils eine komplementär zueinander gebildete Passform (4.12) bzw. (4.22) aufweisen und lösbar miteinander verbunden sind.

2. Raumteiler nach Anspruch 1 oder 2, **dadurch gekennzeichnet, dass** jeder Halter (4.1) eine senkrechte Bohrung (4.11) aufweist.

3. Raumteiler nach einem der Ansprüche 1 bis 3, **dadurch gekennzeichnet, dass** jeder Halter (4.1) eine horizontale Bohrung (4.13) aufweist.

4. Raumteiler nach einem der Ansprüche 1 bis 4, **dadurch gekennzeichnet, dass** jedes Klemmstück (4.2) eine horizontale Bohrung (4.21) aufweist.

5. Raumteiler nach einem der Ansprüche 1 bis 4, **dadurch gekennzeichnet, dass** die senkrechte Bohrung (4.11) jedes Halters (4.1) zum lösbaren Verbinden mit einem Ständer (2) mittels einer ersten Verbindung, vorzugsweise einer Schraubverbindung, vorgesehen ist.

6. Raumteiler nach einem der Ansprüche 1 bis 5, **dadurch gekennzeichnet, dass** die horizontale Bohrung (4.13) jedes Halters (4.1) und die horizontale Bohrung (4.21) jedes Klemmstückes (4.2) zur Aufnahme einer zweiten Verbindung, vorzugsweise Schraubverbindung, vorgesehen ist.

7. Raumteiler nach einem der Ansprüche 1 bis 6, **dadurch gekennzeichnet, dass** jede erste Verbindung vorzugsweise unterhalb jeder zweiten Verbindung angeordnet ist.

8. Raumteiler nach einem der Ansprüche 1 bis 7, **dadurch gekennzeichnet, dass** jeder Halter (4.1) und/oder jedes Klemmstück (4.2) wenigstens eine Zierkappe (8) aufweist.

9. Verfahren zur Herstellung eines Raumteilers nach Anspruch 1, **dadurch gekennzeichnet, dass** jedes Verbindungselement 4 vorzugsweise mittels eines Druckguß-Verfahrens hergestellt wird.

10. Verwendung eines Raumteilers nach Anspruch 1, **dadurch gekennzeichnet, dass** jeder Raumteiler (1) zur Abgrenzung von Flächen, vorzugsweise in SB-Läden, eingesetzt wird.
